# EUROPÄISCHE PATENTANMELDUNG

(11) **EP 1 293 281 A2**
(43) Veröffentlichungstag der Anmeldung: **19.03.2003**
(21) Anmeldenummer: 02014586.8
(22) Anmeldetag: 02.07.2002
(51) Int. Cl.: B23C 3/13

(54) **Verfahren zur Herstellung von in der Dicke variierenden Blechprodukten**

(30) Priorität: 13.09.2001 DE 10145241
(71) Anmelder: Benteler Automobiltechnik GmbH & Co. KG, 33104 Paderborn (DE)
(72) Erfinder: Knaup, Hans-Jürgen, 33175 Bad Lippspringe (DE); Gosmann, Stefan, 33181 Bad Wünnenberg (DE)
(74) Vertreter: Ksoll, Peter, Dr.-Ing.

(57) **Zusammenfassung**

Die Erfindung betrifft ein Verfahren zur Herstellung von in der Dicke (D, D1, D2) variierenden Platinen aus Metallblech zur Fertigung von Bauteilen für Kraftfahrzeuge, bei welchem ein Blechprodukt (1) zumindest auf einer Seite (9) wenigstens partiell in seiner Dicke (D, D1, D2) durch spanabhebende Bearbeitung mit geometrisch bestimmter Schneide reduziert und anschließend einer Kalt- oder Warmumformung zugeführt wird.

## Beschreibung

Die Erfindung betrifft ein Verfahren zur Herstellung von in der Dicke variierenden Blechprodukten zur Fertigung von Bauteilen für Kraftfahrzeuge.

In der Dicke variierende Blechprodukte, vorzugsweise aus Stahlblech, kommen verstärkt im Kraftfahrzeugbau zur Anwendung. Hierdurch kann das Gewicht von Karosseriebauteilen in Anpassung an deren Funktion reduziert werden. Derartige Karosseriebauteile sind beispielsweise A-, B- und C-Säulen, Stoßfänger bzw. deren Querträger, Dachrahmen, Seitenaufprallträger, Außenhautteile usw..

In diesem Zusammenhang zählt es zum Stand der Technik, sogenannte Tailored Blanks einzusetzen. Hierbei handelt es sich um Platinen, die aus mehreren Blechteilen mit gleicher oder unterschiedlicher Blechdicke zusammengeschweißt sind. Auch die Verwendung von sogenannten Patchwork Blanks ist bekannt. Dies sind parallel aufeinander gesetzte Bleche variierender Dicke.

Patchwork Blanks haben noch den Nachteil, dass die Punktschweißverbindungen bei der Umformung hohen Belastungen unterworfen sind und gegebenenfalls auch reißen können. Zudem kann der zwischen den Lagen bestehende Spalt zu Korrosionsproblemen führen, zu deren Beherrschung eine aufwendige Abdichtung notwendig ist. Weiterhin ist der Übergang zwischen den einzelnen Dickenbereichen sowohl bei Tailored Blanks als auch bei Patchwork Blanks relativ schroff. Dadurch können im unmittelbaren Übergangsbereich unerwünschte Spannungsspitzen auftreten.

Obwohl mit den Tailored und Patchwork Blanks eine deutliche Gewichtsreduzierung erreicht wird, ohne die Funktion der Karosseriebauteile zu beeinträchtigen, ist mit ihrer Bereitstellung ein vergleichsweise hoher Aufwand verbunden. Es müssen nämlich Metallbleche verschiedener Dicken zu Streifen geschnitten und dann gefügt werden. Auch sind diese Produkte Wärmebehandlungen durch das Fügen unterworfen, die gegebenenfalls nachteilige Gefügeveränderungen herbeiführen können.

Im Stand der Technik ist auch das Warm- und Kaltumformen von Metallblechen in Walzvorrichtungen bekannt. So beschreibt die DE 42 31 213 A1 die Herstellung von Formkörpern mit unterschiedlichen Wanddicken, bei dem ein zunächst ebenes Blechteil in einem Walzstuhl bereichsweise dickenreduziert und anschließend zum Formkörper weiter verarbeitet wird.

Ähnliche Vorschläge, beispielsweise zur Herstellung von Röhren mit wechselnder Wanddicke, sind durch die DE-PS 104 875, die DE 38 02 445 A1 oder die EP 0 113 705 A1 bekannt.

Der Erfindung liegt die Aufgabe zugrunde, ein Verfahren zur Herstellung von in der Dicke variierenden Blechprodukten zur Fertigung von Bauteilen für Kraftfahrzeuge aufzuzeigen, welches eine hochvariable Dickenverteilung bei einem Blechprodukt ermöglicht, um eine Anpassung der Blechprodukte an die zu erwartenden Belastungen bei gleichzeitiger Gewichtsreduzierung zu ermöglichen.

Die Lösung dieser Aufgabe besteht in einem Verfahren mit den Maßnahmen des Anspruchs 1.

Bei dem erfindungsgemäßen Verfahren wird ein Blechprodukt zumindest auf einer Seite spanabhebend bearbeitet, um es wenigstens partiell mit Vertiefungen zu versehen und in diesen Bereichen in seiner Dicke zu reduzieren. Die spanabhebende Bearbeitung erfolgt mit geometrisch bestimmten Schneiden, insbesondere durch Fräsen. Ein derart spanabhebend bearbeitetes Blechprodukt wird anschließend einer Kalt- oder Warmumformung zugeführt.

Unter spanabhebender Bearbeitung mit geometrisch bestimmter Schneide sind Bearbeitungsverfahren zu verstehen, bei denen die Schneidenanzahl, die Form der Schneidteile und die Lage der Schneiden zum Werkstück bekannt und beschreibbar ist.

Eine spanabhebende Bearbeitung mit geometrisch bestimmter Schneide ermöglicht eine äußerst exakte Bearbeitung des Werkstücks. Insbesondere eignen sich für die Bearbeitung numerisch gesteuerte Werkzeugmaschinen, wobei das Verfahren des High-Speed-Cutting als besonders vorteilhaft angesehen wird.

Ein weiterer Vorteil von spanabhebend bearbeiteten Blechprodukten gegenüber Patchwork Blanks ist die höhere Festigkeit, da hier nicht zwei Lagen durch Punktschweißung nicht flächig miteinander verbunden sind, sondern das Blechprodukt einstückig ausgebildet ist. Da Bereiche unterschiedlicher Dicke bei einem spanabhebend bearbeiteten Blechprodukt nicht gegeneinander abgedichtet werden müssen, wie es bei Patchwork Blanks notwendig ist, kann der Übergang zwischen den einzelnen Bereichen sehr flexibel gestaltet werden. Dadurch erschließen sich neue konstruktive Möglichkeiten.

Durch den Wegfall der Wärmebehandlung durch Fügen, wie es bei Patchwork Blanks erforderlich ist, treten keine nachteiligen Gefügeveränderungen auf. Dementsprechend sind Verformungen und Verwerfungen beim Erwärmen oder Vergüten von spanabhebend bearbeiteten Blechprodukten auch weit weniger zu erwarten als bei Tailored Blanks oder Patchwork Blanks. Ein weiterer Vorteil ist, dass beim Sandstrahlen Strahlgut nicht in das Blechprodukt eindringen kann, wie es bei Tailored oder Patchwork Blanks der Fall sein kann.

Das Blechprodukt kann nach dem erfindungsgemäßen Verfahren sowohl einseitig als auch beidseitig wenigstens partiell spanabhebend bearbeitet werden.

Vorteilhaft wird das Blechprodukt vor der spanabhebenden Verarbeitung zugeschnitten (Anspruch 2), wobei das Blechprodukt nach Anspruch 3 vorzugsweise eben ist. Ein solches zugeschnittenes ebenes Blechprodukt lässt sich aufgrund der einfacheren Handhabbarkeit und auch Stapelbarkeit fertigungstechnisch leichter verarbeiten als bereits zu komplexen Bauteilen umgeformte Platinen. Dennoch kann das Blechprodukt natürlich bereits vor der spanabhebenden Bearbeitung zu einem Vorformling umgeformt worden sein (Anspruch 4), wenn dies den Fertigungsablauf begünstigt.

Ein weiterer Vorteil des erfindungsgemäßen Verfahrens ist, dass zwischen einzelnen Bereichen unterschiedlicher Dicke fließende Übergänge ausgebildet werden können (Anspruch 5). Durch die Ausbildung fließender Übergänge wird einerseits Material eingespart und andererseits wird ein homogener Spannungsverlauf im Übergang zwischen zwei Bereichen unterschiedlicher Dicke ermöglicht.

Während es grundsätzlich möglich ist, die Dicke in den einzelnen Bereichen beliebig zu wählen, ist eine spanabhebende Bearbeitung wirtschaftlich nur dann sinnvoll, wenn die gewünschte Gewichtsreduktion nicht mit hohen Fertigungskosten erkauft wird. Daher ist Gegenstand des Patentanspruchs 6, dass die Unterschiede zwischen den Dicken benachbarter Bereiche etwa 1 mm bis 1,5 mm betragen. Ein Mehrfaches dieser Dickenunterschiede ist natürlich möglich, beispielsweise wenn drei Bereiche unterschiedlicher Dicke in der Form angeordnet sind, dass ein Bereich mit der geringsten Dicke an den Bereich mit der größten Dicke unmittelbar angrenzt.

Nach der Maßnahme gemäß Anspruch 7 wird das Blechprodukt beim Spanvorgang in einer Spanneinrichtung gehalten. Besonders vorteilhaft findet hierbei eine Magnet- oder Vakuumspannplatte Verwendung (Anspruch 8). Eine Vakuum-Spannplatte bietet sich bei der Bearbeitung von Blechprodukten aus Nichteisenmetallen, wie z.B. Aluminium, an.

Anspruch 9 sieht vor, dass ein spanabhebend bearbeitetes erstes Blechprodukt mit wenigstens einem weiteren Blechprodukt zumindest bereichsweise überlappend verschweißt wird. Der Hintergrund ist, dass spanabhebend bearbeitete Blechprodukte nach dem Prinzip der Patchwork Blanks zu einem neuen Patchwork Blank zusammengesetzt werden, wobei sich aufgrund dieses Verfahrens sehr komplexe Blechprodukte bilden lassen, bei denen sowohl sehr dünne als auch relativ dicke Bereiche ausgebildet werden können. Dementsprechend ist nach Anspruch 10 vorgesehen, dass auch das weitere Blechprodukt Bereiche unterschiedlicher Dicken aufweist, wobei diese Bereiche durch spanabhebende Bearbeitung ausgebildet sein können. Das weitere Blechprodukt kann aber auch ein Patchwork oder Tailored Blank sein.

Als Ausgangsmaterial kommen nicht notwendigerweise ausschließlich einstückige Blechprodukte in Frage, sondern vielmehr auch Patchwork Blanks (Anspruch 11). Zwar haben Patchwork oder Tailored Blanks die anfangs genannten Nachteile gegenüber einstückigen Platinen, jedoch können durch die Verwendung von Patchwork oder Tailored Blanks als Ausgangsmaterial sehr große und sehr kleine Dicken realisiert werden.

Blechprodukte im Sinne der Erfindung besitzen nach Anspruch 12 eine Ausgangsdicke von weniger als 5 mm, wobei sich dieses Maß auf einteilige Blechprodukte und nicht auf Patchwork oder Tailored Blanks bezieht.

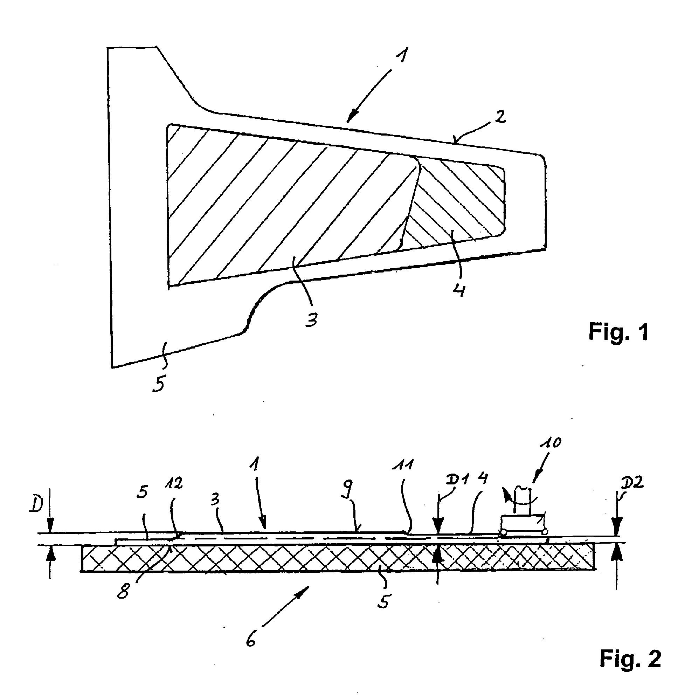

Die Erfindung ist nachfolgend anhand eines in den Zeichnungen dargestellten Ausführungsbeispiels näher beschrieben. Die Figuren 1 und 2 zeigen in schematischer Darstellung den Verfahrensablauf zur Herstellung einer in der Dicke variierenden Platine aus Metallblech.

Figur 1 zeigt in der Draufsicht ein dickenoptimiertes Blechprodukt 1 in Form einer Platine aus Stahlblech zur Fertigung von Bauteilen für Kraftfahrzeuge. Das Blechprodukt 1 besitzt eine etwa T-förmig gestaltete Beschnittkontur 2 mit drei Bereichen unterschiedlicher Dicken. Ein zentraler Bereich 3 besitzt die Dicke D (vgl. Figur 2), wobei die Dicke D der Ausgangsdicke des Blechprodukts entspricht. In der Bildebene rechts schließt sich ein zweiter Bereich 4 mit umgekehrter Schraffur an. Die Dicke D1 des zweiten Bereichs 4 ist kleiner als die Dicke D des ersten Bereichs 3; vgl. Figur 2. Zwischen den ersten und zweiten Bereichen 3, 4 und der Beschnittkontur 2 des Blechprodukts 1 befindet sich ein dritter Bereich 5, dessen Dicke D2 noch einmal gegenüber der Dicke D1 des Bereichs 4 reduziert ist.

Figur 2 zeigt das Blechprodukt 1 in der Seitenansicht. Das Blechprodukt 1 ist hierbei auf einer Spanneinrichtung 6 gehalten. Die Spanneinrichtung 6 besteht aus einer magnetischen Spannplatte 7, auf der das Blechprodukt 1 elektromagnetisch fixiert ist. Das Blechprodukt 1 liegt hierbei mit seiner ebenen Unterseite 8 auf der Spannplatte 5 auf, während die Oberseite 9 des Blechprodukts 1 von einem Bearbeitungswerkzeug 10, das hier ein in Pfeilrichtung rotierender Fräskopf ist, im dritten Bereich 5 spanabhebend bearbeitet wird. In der Seitenansicht der Figur 2 wird auch deutlich, dass sowohl ein erster Übergang 11 zwischen dem ersten Bereich 3 und dem zweiten Bereich 4 als auch ein zweiter Übergang 12 zwischen dem ersten Bereich 3 und dem dritten Bereich 5 gerundet ist. Damit findet ein fließender Übergang zwischen den einzelnen Bereichen 3-5 statt.

Das derart zugeschnittene und spanabhebend vorgefertigte Werkstück wird dann der weiteren umformtechnischen Verarbeitung zu einem Bauteil für ein Kraftfahrzeug zugeleitet.

### Bezugszeichenaufstellung

- 1: - Blechprodukt
- 2: - Beschnittkontur v. 1
- 3: - Bereich v. 1
- 4: - Bereich v. 1
- 5: - Bereich v. 1
- 6: - Spanneinrichtung
- 7: - Spannplatte v. 6
- 8: - Unterseite v. 1
- 9: - Oberseite v. 1
- 10: - Bearbeitungswerkzeug
- 11: - Übergang zw. 3 u. 4
- 12: - Übergang zw. 3 u. 5

- D: - Dicke v. 3
- D1: - Dicke v. 4
- D2: - Dicke v. 5

## Patentansprüche

1. Verfahren zur Herstellung von in der Dicke variierenden Blechprodukten zur Fertigung von Bauteilen für Kraftfahrzeuge, bei welchem partielle Bereiche (4, 5) zumindest auf einer Seite (9) des Blechprodukts (1) mit Vertiefungen gegenüber der Ausgangsdicke (D) des Blechprodukts (1) versehen werden, wobei die Vertiefungen durch spanabhebende Bearbeitung mit geometrisch bestimmter Schneide, insbesondere Fräsen, hergestellt werden und anschließend einer Kalt- oder Warmumformung zugeführt werden.

2. Verfahren nach Anspruch 1, **dadurch gekennzeichnet, dass** das Blechprodukt (1) vor der spanabhebenden Verarbeitung zugeschnitten wird.

3. Verfahren nach Anspruch 1 oder 2, **dadurch gekennzeichnet, dass** das Blechprodukt (1) eben ist.

4. Verfahren nach Anspruch 1 oder 2, **dadurch gekennzeichnet, dass** das Blechprodukt (1) ein Vorformling ist.

5. Verfahren nach einem der Ansprüche 1 bis 4, **dadurch gekennzeichnet, dass** zwischen Bereichen (3, 4, 5) unterschiedlicher Dicke (D, D1, D2) fließende Übergänge (11, 12) ausgebildet werden.

6. Verfahren nach einem der Ansprüche 1 bis 5, **dadurch gekennzeichnet, dass** die Unterschiede zwischen den Dicken (D, D1, D2) benachbarter Bereiche (3, 4, 5) etwa 1 mm bis 1,5 mm oder ein Mehrfaches hiervon betragen.

7. Verfahren nach einem der Ansprüche 1 bis 6, **dadurch gekennzeichnet, dass** das Blechprodukt (1) bei der spanabhebenden Bearbeitung in einer Spanneinrichtung (6) gehalten wird.

8. Verfahren nach Anspruch 7, **dadurch gekennzeichnet, dass** beim Spannvorgang zum Spannen der Blechprodukte (1) eine Magnet-Spannplatte (7) oder eine Vakuum-Spannplatte verwendet wird.

9. Verfahren nach einem der Ansprüche 1 bis 8, **dadurch gekennzeichnet, dass** ein spanabhebend bearbeitetes erstes Blechprodukt (1) mit wenigstens einem weiteren Blechprodukt zumindest bereichsweise überlappend verschweißt wird.

10. Verfahren nach Anspruch 9, **dadurch gekennzeichnet, dass** das weitere Blechprodukt ebenfalls Bereiche unterschiedlicher Dicke aufweist.

11. Verfahren nach einem der Ansprüche 1 bis 7, **dadurch gekennzeichnet, dass** als erstes und/oder weiteres Blechprodukt Patchwork Blanks verwendet werden.

12. Verfahren nach einem der Ansprüche 1 bis 11, **dadurch gekennzeichnet, dass** das Blechprodukt (1) eine Ausgangsdicke (D) von 5 mm oder weniger besitzt.
